(19) Europäisches Patentamt
European Patent Office
Office européen des brevets

(11) Veröffentlichungsnummer : **0 022 520**
**B1**

# (12) EUROPÄISCHE PATENTSCHRIFT

(45) Veröffentlichungstag der Patentschrift : **22.09.82**

(51) Int. Cl.$^3$ : **C 09 B 11/18**

(21) Anmeldenummer : **80103763.1**

(22) Anmeldetag : **02.07.80**
**Die Akte enthält technische Angaben, die nach dem Eingang der Anmeldung eingereicht wurden und die nicht in dieser Patentschrift enthalten sind.**

## (54) Herstellung basischer Triarylmethanfarbstoffe.

(30) Priorität : **13.07.79 DE 2928404**

(43) Veröffentlichungstag der Anmeldung :
**21.01.81 (Patentblatt 81/03)**

(45) Bekanntmachung des Hinweises auf die Patenterteilung : **22.09.82 Patentblatt 82/38**

(84) Benannte Vertragsstaaten :
**CH DE FR GB IT LI**

(56) Entgegenhaltungen :
**EP A 0 012 283**
**DE A 2 152 703**
**DE A 2 739 953**
**DE C 219 417**
**DE C 231 992**

(73) Patentinhaber : **BAYER AG**
**Zentralbereich Patente, Marken und Lizenzen**
**D-5090 Leverkusen 1, Bayerwerk (DE)**

(72) Erfinder : **Hermann, Karl Heinz, Dr.**
**Theodor-Storm-Strasse 4**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 022 520 B1

Imprimerie Jouve, 18, rue St-Denis, 75001 Paris, France

## Herstellung basischer Triarylmethanfarbstoffe

Die Erfindung betrifft ein Verfahren zur Herstellung basischer Farbstoffe der allgemeinen Formel

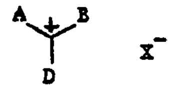 (I)

in der A und B unabhängig voneinander für einen heteroaromatischen Rest oder einen Rest der allgemeinen Formel

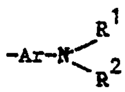 (II)

stehen, in der Ar die Gruppierungen

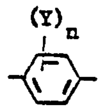 oder 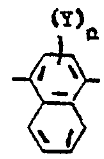 ,

in denen
Y für Wasserstoff oder nichtionische Substituenten und
n für die Zahlen 1 bis 4 stehen, bedeutet und
$R^1$ und $R^2$ für Wasserstoff oder gegebenenfalls durch nichtionische oder saure Gruppen substituiertes Alkyl, Cyclohexyl, Aryl oder Aralkyl stehen oder zusammen oder mit der ortho-Position von Ar einen heterocyclischen Ring bilden,
$X^-$ für ein Anion steht und
D einen heteroaromatischen Rest oder einen Rest der Formeln

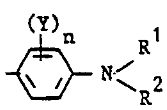 , 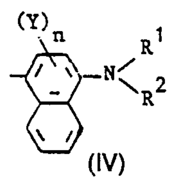 oder 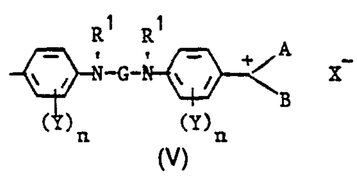 ,

(III) (IV) (V)

in denen
A, B, Y, n, $R^1$, $R^2$ und $X^-$ die oben genannte Bedeutung haben und
G für ein Brückenglied der Formeln

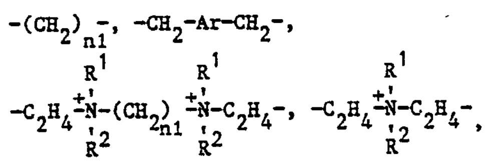

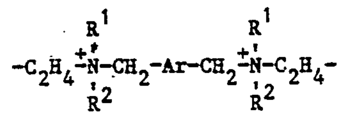 oder

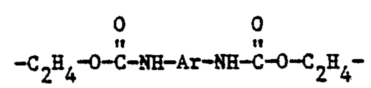

mit Ar = Aryl mit $n^1$ = 2-4 steht oder zusammen mit den beiden benachbarten Gruppierungen N—$R^1$ einen hererocyclischen Ring der Formel

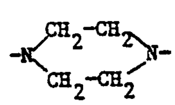

bildet, bedeutet,

dadurch gekennzeichnet, daß man Verbindungen der allgemeinen Formel

$$A{-}CH_2{-}B \qquad (VI)$$

in der A und B die oben angegebene Bedeutung haben,
in Gegenwart einer nucleophilen Verbindung der allgemeinen Formel

$$D{-}H \qquad (VII)$$

in der D einen heteroaromatischen Rest oder einen Rest der Formeln III, IV oder

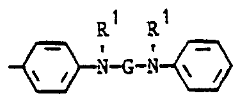
(VIII)

bedeutet,
mit Sauerstoff in Gegenwart katalytischer Mengen von durch Halogen oder Cyan substituierten Benzochinonen oder durch Nitro substituierten Phenanthrenchinonen und in Gegenwart katalytischer Mengen von Stickstoffoxiden — ausgenommen Distickstoffmonoxid — oder von Substanzen, die unter den Reaktionsbedingungen solche Stickstoffoxide erzeugen, oxidiert.

In den Formeln sind unter Alkylresten insbesondere $C_1$- bis $C_4$-Alkylreste zu verstehen. Die Alkylreste tragen beispielsweise 1 bis 3 der nichtionischen oder sauren Substituenten. Als solche sind Halogen, Hydroxy, $C_1$- bis $C_4$-Alkyl, Cyan, $C_1$- bis $C_4$-Alkoxy, $C_1$- bis $C_4$-Alkoxycarbonyl, $C_1$- bis $C_3$-Alkylcarbonyloxy, Aminocarbonyl, Sulfo oder Carboxy zu nennen.

Unter Halogen ist vorzugsweise Fluor, Chlor oder Brom zu verstehen.

Geeignete Arylreste sind insbesondere ein gegebenenfalls substituierter Phenyl- oder Naphthylrest.

Geeignete Aralkylreste sind insbesondere ein gegebenenfalls substituierter Benzyl-, α- oder β-Phenylethyl-, α-, β- oder γ-Phenylpropylrest.

Diese Isocyclen können beispielsweise 1 bis 3 Substituenten, wie Halogen, $C_1$- bis $C_4$-Alkyl, $C_1$- bis $C_4$-Alkoxy, Sulfo oder Carboxyl, tragen.

Die Reste $R^1$ und $R^2$ bilden zusammen oder mit der ortho-Position von Ar z.B. 5- oder 6-gliedrige Ringe ; zusammen bilden sie beispielsweise einen Piperidin-, Pyrrolidin-, Morpholin- oder Piperazin-Ring ; mit der ortho-Position von Ar bilden sie zusammen beispielsweise einen Tetrahydrochinolin-, Indolin-, Julolidin-, Phenmorpholin-, Tetrahydrochinoxalin- oder Carbazol-Ring.

Als heteroaromatischen Ring D seien vor allem der Indolyl-3-, Pyrazolyl-4- und Pyrazolinon-5-yl-4-Ring genannt. Die heterocyclischen Ringe sind z.B. durch $C_1$- bis $C_4$-Alkyl-Gruppen oder Phenyl substituiert.

Unter den oben beschriebenen Farbstoffen lassen sich besonders solche der allgemeinen Formel

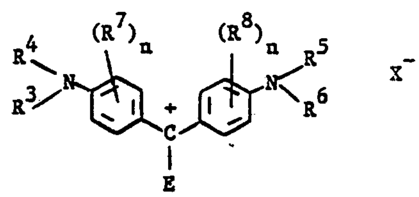
(IX)

gut darstellen, in der unabhängig voneinander

$R^3$ und $R^5$ Wasserstoff $C_1$- bis $C_4$-Alkyl, Hydroxyalkyl mit zwei und drei C-Atomen, Cyanethyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen, $C_1$- bis $C_4$-Halogenalkyl, Sulfoalkyl mit zwei bis vier C-Atomen, Cyclohexyl, Benzyl, Phenyl, Phenethyl, durch Halogen, $C_1$- bis $C_4$-Alkyl oder -Alkoxy substituiertes Phenyl oder Sulfobenzyl,

$R^4$ und $R^6$ $C_1$- bis $C_4$-Alkyl, Hydroxyalkyl mit zwei oder drei C-Atomen, Cyanethyl, $C_1$- bis $C_4$-Halogenalkyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen oder Benzyl bedeuten oder

$R^3$ und $R^4$ und/oder $R^5$ und $R^6$ zusammen einen gegebenenfalls durch $C_1$- bis $C_4$-Alkyl substituierten Pyrrolidin-, Piperidin-, Morpholin- oder Piperazin-Ring oder

$R^3$, $R^4$, $R^5$ und/oder $R^6$ zusammen mit der ortho-Position des Phenylringes einen gegebenenfalls durch $C_1$- bis $C_4$-Alkyl, Phenyl oder Benzyl substituierten Tetrahydrochinolin-, Indolin-, Julolidin-, Phenmorpholin-, Tetrahydrochinoxalin- oder Carbazol-Ring bilden,

$R^7$ und $R^8$ für Wasserstoff, $C_1$- bis $C_4$-Alkyl, $C_1$- bis $C_4$-Alkoxy, Carbonsäure oder Halogen stehen,
n eine ganze Zahl zwischen 1 und 4 bedeutet und
E für einen heterocyclischen Rest der allgemeinen Formel

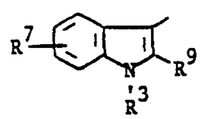

(X)

in der

$R^9$ H, $C_1$- bis $C_4$-Alkyl, Phenyl, Carbonsäure-$C_1$- oder -$C_2$-alkylester, gegebenenfalls durch $C_1$- bis $C_4$-Alkyl N-substituiertes Carbonsäureamid oder $C_1$- bis $C_4$-Alkoxy bedeutet, oder für einen Rest der allgemeinen Formeln

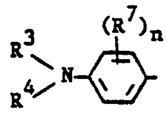

(XI)

und

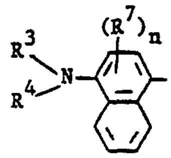

(XII)

in denen n, $R^3$, $R^4$ und $R^7$ die oben genannte Bedeutung haben, steht.

Besonders bevorzugt sind solche Farbstoffe der allgemeinen Formel IX, in der unabhängig voneinander

$R^3$ und $R^5$ für Wasserstoff, Methyl, Ethyl, Oxethyl, Propyl oder Butyl,
$R^4$ und $R^6$ für Methyl, Ethyl Sulfobenzyl oder Sulfoethyl,
$R^7$ und $R^8$ für Wasserstoff, Methyl, Methoxy oder Chlor,
E für den Rest der allgemeinen Formel XI mit
$R^3$ und $R^4$ für Methyl, Ethyl, Oxethyl und
$R^7$ für Wasserstoff, Methyl, Carbonsäure oder Chlor oder für den Rest der allgemeinen Formel X mit
$R^9$ für Wasserstoff, Methyl oder Phenyl und
$R^3$ für Methyl, Ethyl, Oxethyl, Propyl oder Butyl stehen.

Die Anionen leiten sich von anorganischen oder organischen Säuren ab und sind im allgemeinen durch das Herstellungsverfahren und die evtl. vorgenommene Reinigung des rohen Farbstoffes gegeben. Im allgemeinen liegen die Farbstoffe als Zinkchlorid-Doppelsalze, Acetate, Methosulfate, Ethosulfate oder als Halogenide (insbesondere als Chloride oder Bromide) vor. Die Anionen können in bekannter Weise gegen andere Anionen ausgetauscht werden.

Die als Oxidationsmittel eingesetzten Chinone können sein :

Tetrachlor-, Tetrabrom-, Tetrafluor-, Dicyandichlor-1,4-benzochinon, Tetrachlor- oder Tetrabrom-1,2-benzochinon, 2-Nitro-, 2,7-Dinitro- oder 4,5-Dinitrophenanthrenchinon. Bevorzugt werden Tetrachlor- oder Tetrabrom-1,4-benzochinon. Man setzt die Chinone in einer Menge von $10^{-3}$ bis $10^{-1}$ Mol bezogen auf die Molmenge der Verbindung VI ein. Anstelle der Chinone können auch die entsprechenden Hydrochinone eingesetzt werden.

Geeignete Katalysatoren sind :

Stickstoffoxid oder Stickstoffdioxid oder Substanzen, die unter den Reaktionsbedingungen — vor allen Dingen in sauren Lösungsmitteln — Stickstoffoxide freisetzen, z.B. Eisen-III-nitrat oder Natriumnitrit. Die Katalysatoren werden in Konzentrationen von 1 bis 20 Molprozent, bezogen auf das Substrat, angewandt.

Man führt das neue Verfahren so durch, daß man in einem neutralen oder sauren, wäßrigen oder organischen Lösungsmittel Verbindungen der allgemeinen Formel VI und Verbindungen der allgemeinen Formel VII bei Temperaturen zwischen 0 °C und 150 °C, bevorzugt zwischen 20 und 70 °C, löst oder suspendiert, $10^{-3}$ bis $10^{-1}$ mol Chinon, bezogen auf die Molmenge der Verbindung VI, zugibt, die Reaktionslösung intensiv mit zugeführtem Sauerstoff, normalerweise Reinsauerstoff oder Luft, vermischt und im Verlauf der Reaktion entweder 1 bis 20 Molprozent Nitrate oder Nitrite zugibt oder insgesamt 1 bis 20 Molprozent Stickstoffoxide zudosiert. Die Zudosierung kann entweder mit dem Sauerstoffstrom oder aus einer separaten Dosiervorrichtung erfolgen. Um eine hohe Reaktionsgeschwindigkeit zu erreichen, ist eine intensive Durchmischung von Gas und Flüssigkeit notwendig. Das Arbeiten unter Druck ist auch möglich.

Man kann auch so vorgehen, daß man die Verbindungen der allgemeinen Formel VII nicht schon zu Beginn der Oxidationsreaktion zugibt, sondern erst in deren Verlauf. Es ist auch möglich, die Verbindungen der allgemeinen Formel VI nicht als solche einzusetzen, sondern sie unter den erfindungsgemäßen Reaktionsbedingungen durch Einsatz der zugehörigen Ausgangsprodukte (Formaldehyd und Dialkylanilin) zu bilden.

Geeignete Lösungsmittel für die Oxidation sind z.B. :

Methylenchlorid, Chloroform, Tetrachlorkohlenstoff, Chlorbenzol, Dichlorbenzol, Benzol, Toluol, Xylol, Cumol, Essigsäure, Propionsäure, Milchsäure, Dichlorethan, Methanol, Ethanol, Propanol, Isopropanol, Butanol, Glykol, methylglykol, Dimethylglykol, Tetrahydrofuran, Dioxan, Essigester, Dimethylformamid, N-Methylpyrrolidon, Aceton oder Mischungen davon. Man kann auch in wäßriger

Lösung oder Suspensión oder in einem Gemisch aus Wasser und mit Wasser mischbaren Lösungsmitteln arbeiten. Der pH-Wert der Reaktionslösung sollte je nach Farbstoff im neutralen bis sauren Bereich liegen. Bevorzugt ist der saure pH-Bereich zwischen pH 1 und pH 4. Die folgenden Beispiele veranschaulichen die Erfindung.

Aus der DE-A-2 152 703 ist ein Verfahren zur Herstellung von Triarylmethanfarbstoffen bekannt, das sich von dem neuen Verfahren dadurch unterscheidet, daß Schwermetallkomplexe anstelle der Stickstoffoxide als Katalysatoren verwendet werden. Überraschenderweise wurde nun gefunden, daß die katalytische Oxidation in gegenwart der Stickstoffoxide zu Triarylmethanfarbstoffen führt. Diese glatte Reaktion war aus der Kenntnis des aus der DE-C 231 992 bekannten Oxidationsverfahrens zur Herstellung von Triarylmethanfarbstoffen nicht vorhersehbar, da in dieser Patentschrift keine katalytische Oxidation, sondern vielmehr eine Oxidation mit Nitrosylschwefelsäure beschrieben wird.

Beispiel 1

76,2 g 4,4'-Bis-(dimethylamino)-diphenylmethan, 36,3 g Dimethylanilin, 6 g Chloranil und 600 g Eisessig werden bei 40 °C intensiv mit Luft Behandelt. Im Verlauf der Reaktion — Reaktionsdauer ca. 24 h — werden gleichmäßig insgesamt 1,2 g eines Gemisches aus Stickstoffmonoxid und Stickstofffioxid — erzeugt durch Behandeln von Natriumnitrit mit Schwefelsäure — zudosiert. nach Beendigung der Reaktion enthält die Reaktionslösung Kristallviolett in 87 %iger Ausbeute. Nach Abdestillieren des Eisessigs wird der Rückstand bei 80 °C in 500 g Wasser gelöst. Nach Filtration wird der Farbstoff durch Zugabe von Natriumchlorid ausgefällt. Ausbeute : 101 g.

Ähnlich gute Ergebnisse erhält man, wenn man während der Luftoxidation anstelle der Stickstoffoxide gleichmäßig 2,5 g Natriumnitrit oder 2,5 g Eisen-III-nitrat zusetzt.

Beispiel 2

93 g 4,4'-Bis-(diethylamino)-diphenylmethan, 36,3 g Dimethylanilin, 6 g Chloranil und 600 g Eisessig werden bei 40 °C intensiv mit Luft begast. Im Verlauf der Reaktion werden gleichmäßig insgesamt 1,2 g eines Gemisches aus Stickstoffmonoxid und Stickstoffdioxid — erzeugt durch Behandeln von Natriumnitrit mit Schwefelsäure — zudosiert. Nach Beendigung der Reaktion enthält die Reaktionslösung den Farbstoff der Formel

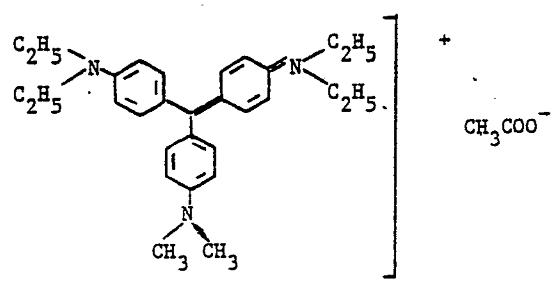

in 82 %iger Ausbeute.

Nach dem erfindungsgemäßen Verfahren lassen sich folgende Diphenylmethane und Verbindungen der allgemeinen Formel VII zu Triarylmethanfarbstoffen oxidieren :

| Beispiel | Diphenylmethan | Verbindung der Formel VII |
|---|---|---|
| 3 | 4,4'-Bis-(dimethylamino)-diphenylmethan | 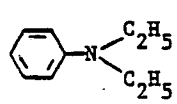 |
| 4 | " | 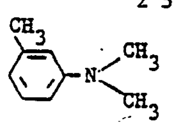 |
| 5 | " | 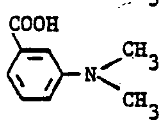 |

| Beispiel | Diphenylmethan | Verbindungen der Formel VII |
|---|---|---|
| 6 | " | 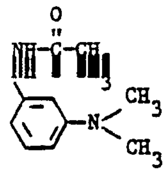 |
| 7 | " | 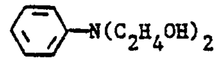 |
| 8 | " | 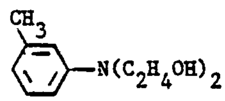 |
| 9 | " | 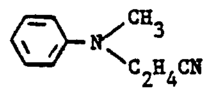 |
| 10 | " | 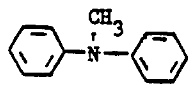 |
| 11 | " | 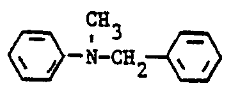 |
| 12 | 4,4'-Bis-(dimethyl-amino)-diphenylmethan | 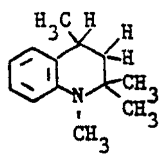 |
| 13 | " | 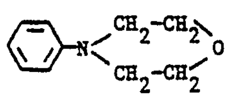 |
| 14 | " | 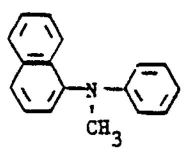 |
| 15 | " | 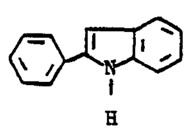 |
| 16 | " | 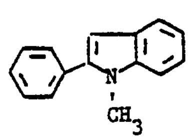 |
| 17 | " | 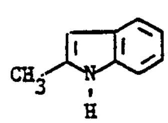 |
| 18 | 4,4'-Bis-(diethyl-amino)-diphenylmethan | 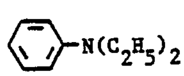 |
| 19 | " | 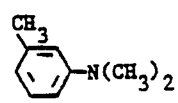 |

| Beispiel | Diphenylmethan | Verbindungen der Formel VII |
|---|---|---|
| 20 | " | 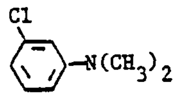 |
| 21 | " | 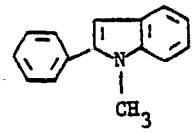 |
| 22 | 4,4'-Bis-(cyanethylethyl-amino)-diphenylmethan | 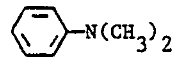 |
| 23 | " | 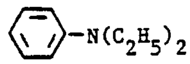 |
| 24 | " | 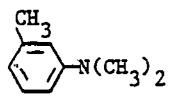 |
| 25 | 4,4'-Bis-(dimethylamino)-2,2'-dimethyl-diphenylmethan | 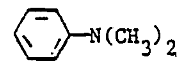 |
| 26 | " | 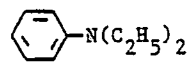 |
| 27 | " | 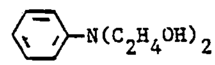 |

### Beispiel 28

Eine Mischung aus 108,9 g Dimethylanilin, 12 g Paraformaldehyd, 600 g Eisessig und 6 g Chloranil wird 2 h auf 60 °C erwärmt. Danach wird die Reaktionsmischung auf 40 °C gekühlt und anschließend intensiv mit Luft begast. Im Verlauf der Reaktion werden gleichmäßig insgesamt 1,2 g eines Gemisches aus Stickstoffmonoxid und Stickstoffdioxid zudosiert. Nach Beendigung der Reaktion wird, wie in Beispiel 1 beschrieben, aufgearbeitet. Es werden 95 g Kristallviolett erhalten.

**Ansprüche**

1. Verfahren zur Herstellung basischer Farbstoffe der allgemeinen Formel

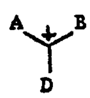 $X^-$,

in der A und B unabhängig voneinander für einen heteroaromatischen Rest oder einen Rest der allgemeinen Formel

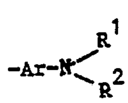

stehen, in der Ar die Gruppierungen

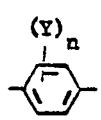 oder 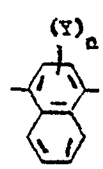 ,

in denen

Y für Wasserstoff oder nichtionische Substituenten und

n für die Zahlen 1 bis 4 stehen, bedeutet und

$R^1$ und $R^2$ für Wasserstoff oder gegebenenfalls durch nichtionische oder saure Gruppen substituiertes Alkyl, Cyclohexyl, Aryl oder Aralkyl stehen oder zusammen oder mit der ortho-Position von Ar einen heterocyclischen Ring bilden,

$X^-$ für ein Anion steht und

D einen heteroaromatischen Rest oder einen Rest der Formeln

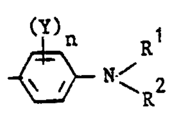 , 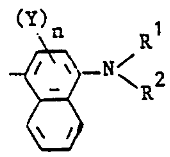 oder 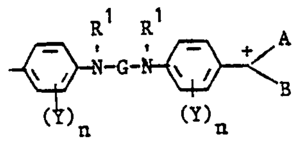 $X^-$ ,

in denen

A, B, Y, n, $R^1$, $R^2$ und $X^-$ die oben genannte Bedeutung haben und

G für ein Brückenglied der Formeln

$-(CH_2)_{n1}-$, $-CH_2-Ar-CH_2-$,

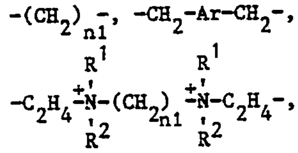 , 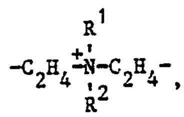 ,

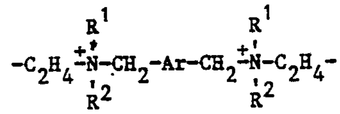 oder

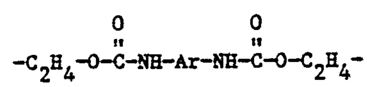

mit Ar = Aryl und $n^1$ = 2-4 steht oder zusammen mit den beiden benachbarten Gruppierungen N—$R^1$ einen heterocyclischen Ring der Formel

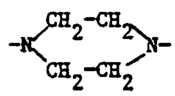

bildet, bedeutet,

dadurch gekennzeichnet, daß man Verbindungen der allgemeinen Formel

$$A—CH_2—B,$$

in der A und B die oben genannte Bedeutung haben,

in Gegenwart einer nucleophilen Verbindung der allgemeinen Formel

$$D—H,$$

in der D einen heteroaromatischen Rest oder einen Rest der Formeln

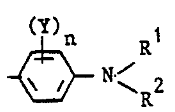 , 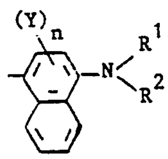 oder 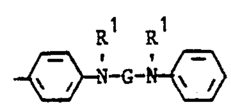

bedeutet, in der $R^1$, $R^2$, Y, n und G die obengeannten bedeutungen haben,

mit Sauerstoff in Gegenwart katalytischer Mengen von durch Halogen oder Cyan substituierten Benzochinonen oder durch Nitro substituierten Phenanthrenchinonen und in Gegenwart katalytischer Mengen von Stickstoffoxiden — ausgenommen Distickstoffmonoxid — oder von Substanzen, die unter den Reaktionsbedingungen solche Stickstoffoxide erzeugen, oxidiert.

2. Verfahren gemäß Anspruch 1, dadurch gekennzeichnet, daß man Verbindungen der allgemeinen Formel

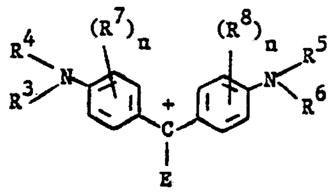

$X^-$ ,

in der unabhängig voneinander

$R^3$ und $R^5$ Wasserstoff, $C_1$- bis $C_4$-Alkyl, Hydroxyalkyl mit zwei und drei C-Atomen, Cyanethyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen, $C_1$- bis $C_4$-Halogenalkyl, Sulfoalkyl mit zwei bis vier C-Atomen, Cyclohexyl, Benzyl, Phenyl, Phenethyl, durch Halogen, $C_1$- bis $C_4$-Alkyl oder -Alkoxy substituiertes Phenyl oder Sulfobenzyl,

$R^4$ und $R^6$ $C_1$- bis $C_4$-Alkyl, Hydroxyalkyl mit zwei oder drei C-Atomen, Cyanethyl, $C_1$- bis $C_4$-Halogenalkyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen oder Benzyl bedeuten oder

$R^3$ und $R^4$ und/oder $R^5$ und $R^6$ zusammen einen gegebenenfalls durch $C_1$- bis $C_4$-Alkyl substituierten Pyrrolidin-, Piperidin-, Morpholin- oder Piperazin-Ring oder

$R^3$, $R^4$, $R^5$ und/oder $R^6$ zusammen mit der ortho-Position des Phenylringes einen gegebenenfalls durch $C_1$- bis $C_4$-Alkyl, Phenyl oder Benzyl substituierten Tetrahydrochinolin-, Indolin-, Julolidin-, Phenmorpholin-, Tetrahydrochinoxalin oder Carbazol-Ring bilden,

$R^7$ und $R^8$ für Wasserstoff, $C_1$- bis $C_4$-Alkyl, $C_1$- bis $C_4$-Alkoxy, Carbonsäure oder Halogen stehen,

n eine ganze Zahl zwischen 1 und 4 bedeutet und

E für einen heteroaromatischen Rest der allgemeinen Formel

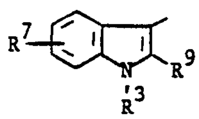

in der $R^9$ H, $C_1$- bis $C_4$-Alkyl, Phenyl, Carbonsäure-$C_1$- bis -$C_2$-alkylester, gegebenenfalls durch $C_1$- bis $C_4$-Alkyl N-substituiertes Carbonsäureamid oder $C_1$- bis $C_4$-Alkoxy bedeutet, oder für einen Rest der allgemeinen Formeln

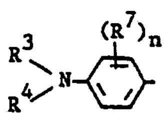

und

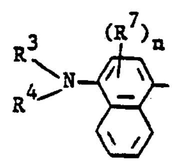

steht, in denen n, $R^3$, $R^4$ und $R^7$ die oben genannte Bedeutung haben,
durch Oxidation von Verbindungen der allgemeinen Formel

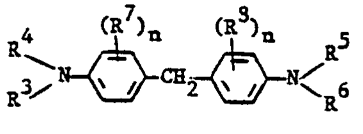

in der n und $R^3$ bis $R^8$ die oben genannte Bedeutung haben,
in Gegenwart einer nucleophilen Verbindung E—H, in der E die oben genannte Bedeutung hat,
mit Sauerstoff in Gegenwart katalytischer Mengen von Stickstoffmonoxid, Stickstoffdioxid, Natriumnitrit oder Eisen-III-nitrat darstellt.

3. Verfahren gemäß Anspruch 1, dadurch gekennzeichnet, daß man verbindungen des Anspruchs 2, worin

$R^3$ und $R^5$ für Wasserstoff, Methyl, Ethyl, Oxethyl, Propyl oder Butyl,

$R^4$ und $R^6$ für Methyl, Ethyl, Sulfobenzyl oder Sulfoethyl,

$R^7$ und $R^8$ für Wasserstoff, Methyl, Methoxy oder Chlor,

E für den Rest der allgemeinen Formel

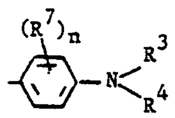 mit

$R^3$ und $R^4$ für Methyl, Ethyl, Oxethyl und
$R^7$ für Wasserstoff, Methyl, Carbonsäure oder Chlor oder für den Rest der allgemeinen Formel

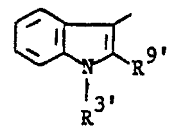 mit

$R^{3'}$ für Methyl, Ethyl, Oxethyl, Propyl oder Butyl,
$R^{9'}$ für H, Methyl oder Phenyl steht und
n und $X^-$ die Bedeutung des Anspruches 2 haben,
durch Oxidation entsprechender Diarylmethanverbindungen in Gegenwart entsprechender nucleophiler Verbindungen E—H mit Sauerstoff in Gegenwart katalytischer Mengen Tetrachlor- oder tetrabrom-1,4-benzochinon und katalytischer Mengen Stickstoffmonoxid und/oder Stickstoffdioxid herstellt.

**Claims**

1. Process for the preparation of basic dyestuffs of the general formula

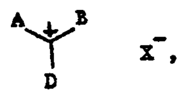

in which A and B independently of one another represent a hetero-aromatic radical or a radical of the general formula

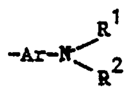

in which Ar denotes the groupings

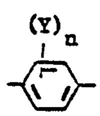 or 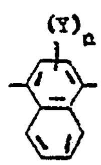

in which
Y represents hydrogen or non-ionic substituents and
n represents the numbers 1 to 4, and
$R^1$ and $R^2$ represent hydrogen or alkyl, cyclohexyl, aryl or aralkyl, optionally substituted by non-ionic or acid groups, or, together with the ortho-position of Ar, form a heterocyclic ring, and
$X^-$ represents an anion and
D denotes a hetero-aromatic radical or a radical of the formulae

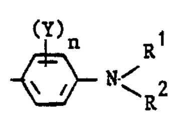, 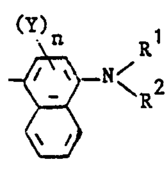 or 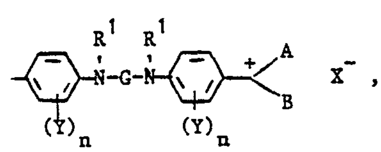

in which
A, B, Y, n, $R^1$, $R^2$ and $X^-$ have the abovementioned meaning and
G represents a bridge member of the formulae

$-(CH_2)_{n1}-$, $-CH_2-Ar-CH_2-$,

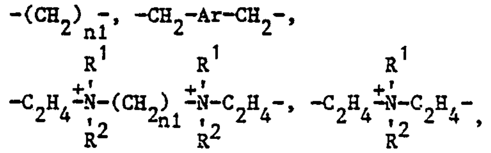

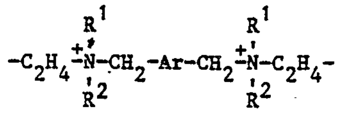 or

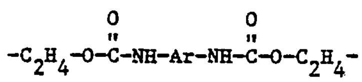

in which Ar = aryl and $n^1$ = 2-4, or, together with the two adjacent groupings N—$R^1$, forms a heterocyclic ring of the formula

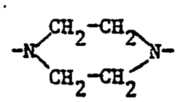

characterised in that compounds of the general formula

A—$CH_2$—B

in which A and B have the abovementioned meaning, are oxidised with oxygen in the presence of a nucleophilic compound of the general formula

D—H

in which D denotes a hetero-aromatic radical or a radical of the formulae

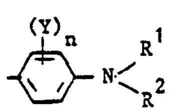, 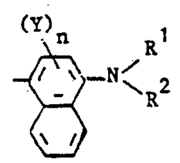 or 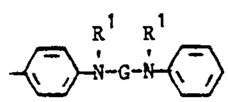

in which $R^1$, $R^2$, Y, n and G have the abovementioned meanings,
and in the presence of catalytic amounts of benzoquinones substituted by halogen or cyano or of phenanthrenequinones substituted by nitro, and in the presence of catalytic amounts of nitrogen oxides — with the exception of dinitrogen monoxide — or of substances which produce such nitrogen oxides under the reaction conditions.

2. Process according to Claim 1, characterised in that compounds of the general formula

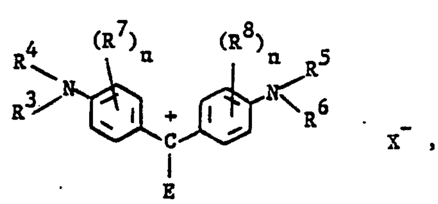

in which, independently of one another,

$R^3$ and $R^5$ denote hydrogen, $C_1$- to $C_4$-alkyl, hydroxyalkyl with two and three C atoms, cyanoethyl, alkoxyalkyl with a total of three to five C atoms, alkoxycarbonylalkyl with a total of three to eight C atoms, alkylcarbonyloxyalkyl with a total of three to eight C atoms, $C_1$- to $C_4$-halogenoalkyl, sulphoalkyl with two to four C atoms, cyclohexyl, benzyl, phenyl, phenethyl, phenyl which is substituted by halogen or $C_1$- to $C_4$-alkyl or -alkoxy, or sulphobenzyl and

$R^4$ and $R^6$ denote $C_1$- to $C_4$-alkyl, hydroxyalkyl with two or three C atoms, cyanoethyl, $C_1$- to $C_4$-halogenoalkyl, alkoxyalkyl with a total of three to five C atoms, alkoxycarbonylalkyl with a total of three to eight C atoms, alkylcarbonyloxyalkyl with a total of three to eight C atoms or benzyl, or

$R^3$ and $R^4$ and/or $R^5$ and $R^6$ together form a pyrrolidine, piperidine, morpholine or piperazine ring which is optionally substituted by $C_1$- to $C_4$-alkyl, or

$R^3$, $R^4$, $R^5$ and/or $R^6$, together with the orthoposition of the phenyl ring, form a tetrahydroquinoline, indoline, julolidine, phenmorpholine, tetrahydroquinoxaline or carbazole ring which is optionally substituted by $C_1$- to $C_4$-alkyl, phenyl or benzyl,

$R^7$ and $R^8$ represent hydrogen, $C_1$- to $C_4$-alkyl, $C_1$- to $C_4$-alkoxy, carboxylic acid or halogen,

n denotes an integer between 1 and 4 and

E represents a hetero-aromatic radical of the general formula

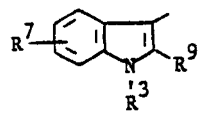

in which $R^9$ represents H, $C_1$- to $C_4$-alkyl, phenyl, carboxylic acid $C_1$- or $C_2$-alkyl ester, carboxylic acid amide which is optionally N-substituted by $C_1$- to $C_4$-alkyl, or $C_1$- to $C_4$-alkoxy or a radical of the general formulae

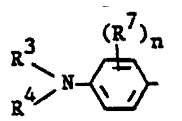

and

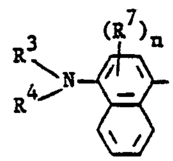

in which n, $R^3$, $R^4$ and $R^7$ have the abovementioned meaning, are prepared by oxidation of compounds of the general formula

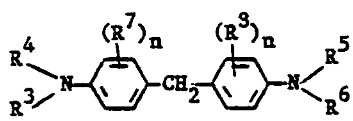

in which n and $R^3$ to $R^8$ have the abovementioned meaning, with oxygen in the presence of a nucleophilic compound E—H

in which E has the abovementioned meaning,

and in the presence of catalytic amounts of nitrogen monoxide, nitrogen dioxide, sodium nitrite or iron-III nitrate.

3. Process according to Claim 1, characterised in that compounds of Claim 2 wherein

$R^3$ and $R^5$ represent hydrogen, methyl, ethyl, hydroxyethyl, propyl or butyl,

$R^4$ and $R^6$ represent methyl, ethyl, sulphobenzyl or sulphoethyl,

$R^7$ and $R^8$ represent hydrogen, methyl, methoxy or chlorine and

E represents the radical of the general formula

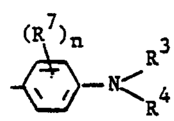

in which

$R^3$ and $R^4$ represent methyl, ethyl or hydroxyethyl and

$R^7$ represents hydrogen, methyl, carboxylic acid or chlorine, or the radical of the general formula

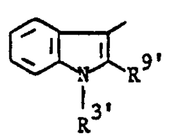

in which

$R^{3'}$ represents methyl, ethyl, hydroxyethyl, propyl or butyl and

$R^{9'}$ represents H, methyl or phenyl, and

n and $X^-$ have the meaning given in Claim 2, are prepared by oxidation of corresponding diarylmethane compounds with oxygen in the presence of corresponding nucleophilic compounds E—H and in the presence of catalytic amounts of tetrachloro- or tetrabromo-1,4-benzoquinone and catalytic amounts of nitrogen monoxide and/or nitrogen dioxide.

**Revendications**

1. Procédé de production de colorants basiques de formule générale

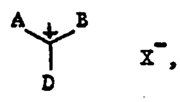

dans laquelle A et B représentent indépendamment l'un de l'autre un reste hétéro-aromatique ou un reste de formule générale

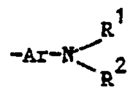

dans laquelle Ar désigne les groupements

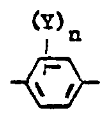

ou

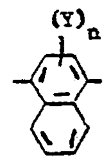

dans lesquels
Y est l'hydrogène ou des substituants non ioniques et
n représente les nombres de 1 à 4 et
$R^1$ et $R^2$ représentent l'hydrogène ou un groupe alkyle cyclohexyle, aryle ou aralkyle éventuellement substitué par des groupes non ioniques ou acides, ou forment ensemble ou avec la position ortho de Ar, un noyau hétérocyclique,
$X^-$ désigne un anion et
D est un reste hétéro-aromatique ou un reste de formules

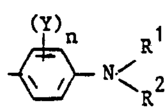

,

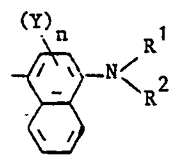

ou

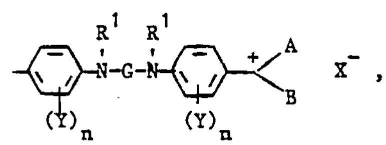

dans lesquelles
A, B, Y, n, $R^1$, $R^2$ et $X^-$ ont la définition indiquée ci-dessus et
G désigne un pont de formules

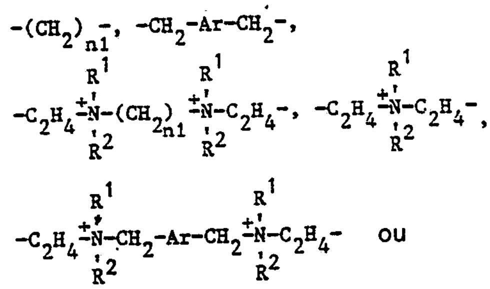

ou

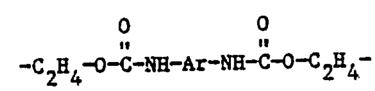

où Ar = aryle et $n^1$ = 2-4 ou forme, conjointement avec les deux groupements N—$R^1$ voisins, un noyau hétérocyclique de formule

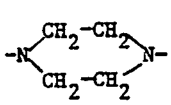

caractérisé en ce qu'on oxyde des composés de formule générale

A—$CH_2$—B,

dans laquelle A et B ont la définition indiquée ci-dessus, en présence d'un composé nucléophile de formule générale

D—H

dans laquelle D est un reste hétéro-aromatique ou un reste de formules

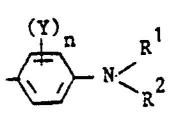 , 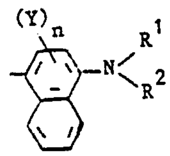 ou 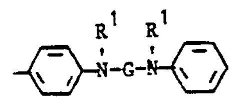

dans lesquelles $R^1$, $R^2$, Y, n et G ont les définitions indiquées ci-dessus, avec l'oxygène en présence de quantités catalytiques de benzoquinones substituées par un halogène ou un groupe cyano ou de phénanthrène-quinones substituées par un radical nitro et en présence de quantités catalytiques d'oxydes d'azote — à l'exception du protoxyde d'azote — ou de substances qui produisent de tels oxydes d'azote dans les conditions réactionnelles.

2. Procédé suivant la revendication 1, caractérisé en ce qu'on produit des composés de formule générale

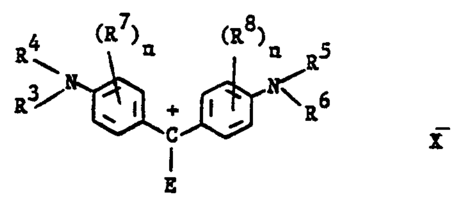

dans laquelle, indépendamment l'un de l'autre,

$R^3$ et $R^5$ représentent l'hydrogène, un groupe alkyle en $C_1$ à $C_4$, hydroxyalkyle ayant 2 et 3 atomes de carbone, cyanéthyle, alkoxyalkyle totalisant 3 à 5 atomes de carbone, alkoxycarbonylalkyle totalisant 3 à 8 atomes de carbone, alkylcarbonyloxyalkyle totalisant 3 à 8 atomes de carbone, halogénalkyle en $C_1$ à $C_4$, sulfo-alkyle ayant 2 à 4 atomes de carbone, cyclohexyle, benzyle, phényle, phénéthyle, phényle substitué par un halogène, un radical alkyle ou alkoxy en $C_1$ à $C_4$, ou sulfobenzyle,

$R^4$ et $R^6$ désignent un groupe alkyle en $C_1$ à $C_4$, hydroxyalkyle ayant 2 ou 3 atomes de carbone, cyanéthyle, halogénalkyle en $C_1$ à $C_4$, alkoxyalkyle totalisant 3 à 5 atomes de carbone, alkoxycarbonylalkyle totalisant 3 à 8 atomes de carbone, alkylcarbonyloxyalkyle totalisant 3 à 8 atomes de carbone ou benzyle, où bien

$R^3$ et $R^4$ et/ou $R^5$ et $R^6$ forment conjointement un noyau de pyrrolidine, de pipéridine, de morpholine ou de pipérazine éventuellement substitué par un radical alkyle en $C_1$ à $C_4$ ou bien

$R^3$, $R^4$, $R^5$ et/ou $R^6$ forment conjointement avec la position ortho du noyau phényle un noyau tétrahydroquinoléine indoline, julolidine, phénomorpholine, tétrahydroquinoxaline ou carbazole éventuellement substitué par un radical alkyle en $C_1$ à $C_4$, phényle ou benzyle,

$R^7$ et $R^8$ représentent l'hydrogène, un groupe alkyle en $C_1$ à $C_4$, alkoxy en $C_1$ à $C_4$, acide carboxylique ou un halogène,

n est un nombre entier ayant une valeur de 1 à 4 et

E est un reste hétéro-aromatique de formule générale

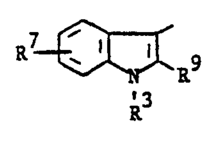

dans laquelle $R^9$ représente H, un groupe alkyle en $C_1$ à $C_4$, phényle, ester alkylique en $C_1$ ou $C_2$ d'acide carboxylique, amide d'acide carboxylique éventuellement substitué sur N par un groupe alkyle en $C_1$ à $C_4$ ou un groupe alkoxy en $C_1$ à $C_4$, ou un reste de formules générales

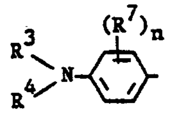 et 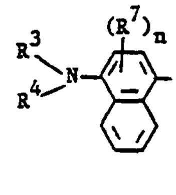

dans lesquelles n, $R^3$, $R^4$ et $R^7$ ont la définition indiquée ci-dessus, par oxydation de composés de formule générale

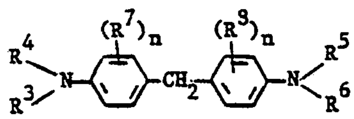

dans laquelle n et $R^3$ à $R^8$ ont la définition indiquée ci-dessus, en présence d'un composé nucléophile E—H dans lequel E a la définition indiquée ci-dessus,
avec l'oxygène en présence de quantités catalytiques d'oxyde azotique, de peroxyde d'azote, de nitrite de sodium ou de nitrate de fer-III.

3. Procédé suivant la revendication 1, caractérisé en ce qu'on produit des composés suivant la revendication 2, dans lesquels

$R^3$ et $R^5$ représentent l'hydrogène ou le groupe méthyle, éthyle, oxéthyle, propyle ou butyle,
$R^4$ et $R^6$ représentent un groupe méthyle, éthyle, sulfobenzyle ou sulfoéthyle,
$R^7$ et $R^8$ représentent l'hydrogène, un groupe méthyle, méthoxy ou le chlore,
E est le reste de formule générale

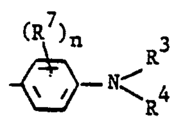

dans laquelle
$R^3$ et $R^4$ représentent un groupe méthyle, éthyle, oxéthyle et
$R^7$ est l'hydrogène, un groupe méthyle, un groupe acide carboxylique ou du chlore ou le reste de formule générale

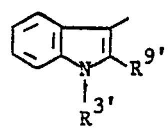

dans laquelle
$R^{3'}$ est un groupe méthyle, éthyle, oxéthyle, propyle ou butyle,
$R^{9'}$ représente H, un groupe méthyle ou phényle et
n et $X^-$ ont la définition donnée dans la revendication 2,
par oxydation de composés de diarylméthane correspondants en présence de composés nucléophiles E—H correspondants avec l'oxygène en présence de quantités catalytiques de tétrachloro- ou tétrabromo-1,4-benzoquinone et de quantités catalytiques d'oxyde azotique et/ou de peroxyde d'azote.